# EUROPÄISCHE PATENTSCHRIFT

(11) **EP 0 478 504 B1**
(45) Veröffentlichungstag und Bekanntmachung des Hinweises auf die Patenterteilung: **21.05.1997**
(21) Anmeldenummer: 91810735.0
(22) Anmeldetag: 17.09.1991
(51) Int. Cl.: C09B 62/04, D06P 1/382

(54) **Reaktivfarbstoffe, Verfahren zu deren Herstellung und deren Verwendung**
Reactive dyes, methods of their preparation and their use
Colorants réactifs, procédés de leur préparation et leur utilisation

(30) Priorität: 25.09.1990 CH 3076/90
(43) Veröffentlichungstag der Anmeldung: 01.04.1992
(73) Patentinhaber: Ciba Specialty Chemicals Holding Inc., 4057 Basel (CH)
(72) Erfinder: Tzikas, Athanassios, Dr., CH-4133 Pratteln (CH)

(56) Entgegenhaltungen:
- EP-A- 352 222
- EP-A- 0 096 659
- EP-A- 0 267 524
- EP-A- 0 405 101
- DE-A- 2 751 137
- GB-A- 2 200 131

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie ein Verfahren zur Herstellung dieser Farbstoffe, und deren Verwendung zum Färben oder Bedrucken von textilen Materialien.

Es sind bereits aus der EP-A-352222 Verbindungen der unten angegebenen Formel (1) bekannt, worin D ein Formazanrest, B ein Phenylenrest und -COY ein faserreaktiver Haloacetyl-, α,β-Dihalogenpropionyl- oder α-Halogenacryloylrest sind, und welche als Farbstoffe insbesondere für das Färben von natürlichen oder synthetischen Polyamidfasermaterialien geeignet sind.

Gegenstand der Erfindung sind Reaktivfarbstoffe der Formel 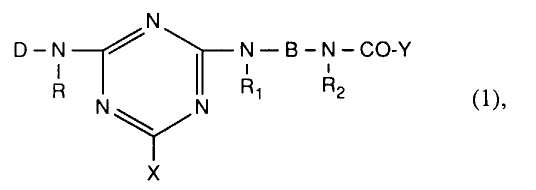 worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; R Wasserstoff oder Alkyl mit 1 bis 4 Kohlenstoffatomen, das durch Hydroxy, Cyan, Carboxy, Sulfo oder Sulfato substituiert sein kann; X Fluor oder Chlor; R₁ Wasserstoff, Alkyl mit 1 bis 4 Kohlenstoffatomen, das durch Halogen, Hydroxy, Cyan, C₁-C₄-Alkoxy, C₁-C₄-Alkoxycarbonyl, Carboxy, Carbamoyl, Sulfamoyl, Sulfo oder Sulfato substituiert sein kann, oder ein Rest der Formel 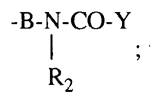 und der Rest 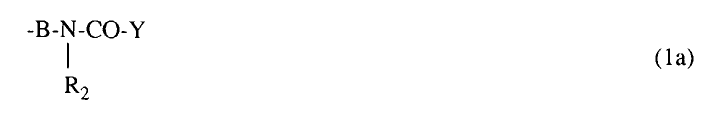 ein Rest der Formel 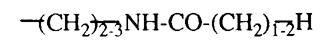 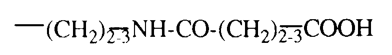 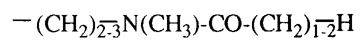 oder 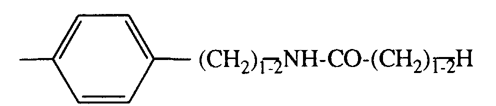 sind; oder worin der Rest 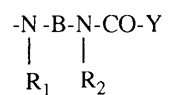 die Gruppe -NH-CH₂-CH(CH₃)-NHCOCH₃ bedeutet.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein, z.B. durch Hydroxy, Cyan, Carboxy, Sulfo oder Sulfato. Als Beispiele für R seien genannt: Methyl, Ethyl, n- Propyl, Isopropyl, n-Butyl, Isobutyl, sek.-Butyl, tert.-Butyl, Sulfomethyl, Carboxymethyl, β-Hydroxyethyl.

Der Rest R₁ ist, falls es sich um einen Alkylrest handelt, geradkettig oder verzweigt; er kann weitersubstituiert sein, z.B. durch Halogen, Hydroxy, Cyan, C₁-C₄-Alkoxy, C₁-C₄-Alkoxycarbonyl, Carboxy, Carbamoyl, Sulfamoyl, Sulfo oder Sulfato. Als Beispiele für R₁ und R₂ seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl. Vorzugsweise ist R₁ Wasserstoff, Methyl oder Ethyl.

Bevorzugte Ausführungsformen der Reaktivfarbstoffe der Formel (1) sind dadurch gekennzeichnet, dass
a) R Wasserstoff, Methyl oder Ethyl ist;
b) R₁ Wasserstoff ist.

Ganz besonders bevorzugt sind die Reaktivfarbstoffe der Formel (1), worin der Rest der Formel 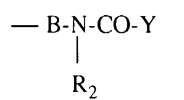 ein Rest der Formel 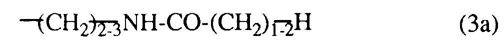 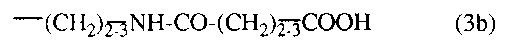 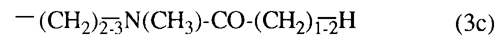 oder 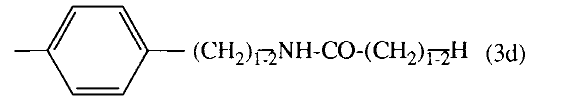 ist, insbesondere sind die Reaktivfarbstoffe der Formel (1) ganz besonders bevorzugt, worin R und R₁ die unter
a) und b) angegebenen Bedeutungen haben und der Rest der Formel 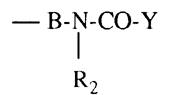 ein Rest der Formel (3a) bis (3d) ist.

Ganz besonders bevorzugt sind die Reaktivfarbstoffe der Formel (1), worin D der Rest eines Monoazo- oder Disazo-, Phthalocyanin-, Formazan- oder Dioxazinfarbstoffes ist.

Besonders wichtig sind Reaktivfarbstoffe der Formel (1) worin D ein Rest eines Formazanfarbstoffes der Formel 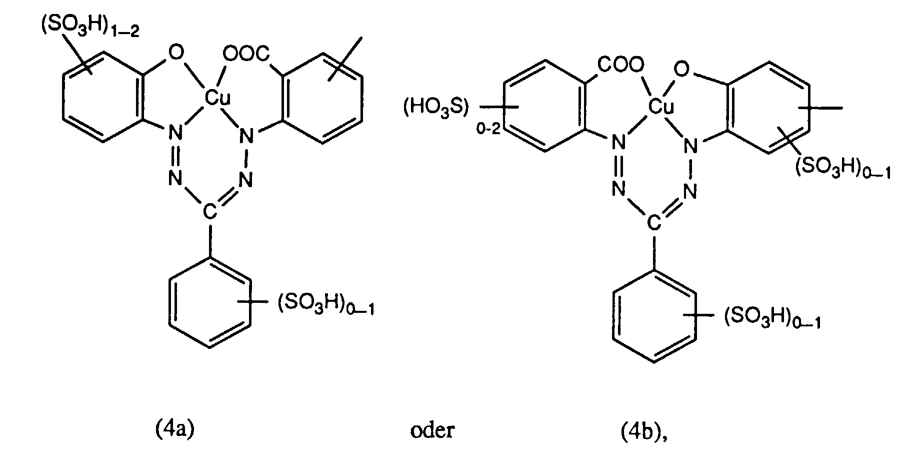 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

Besonders wichtig sind insbesondere Reaktivfarbstoffe der Formel (1) worin D ein Rest der folgenden Formeln (5) bis (17) ist: 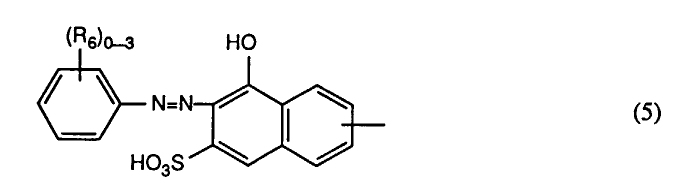 worin R₆ C₁-C₄-Alkyl, C₁-C₄-Alkoxy, Halogen, Carboxy und Sulfo ist. 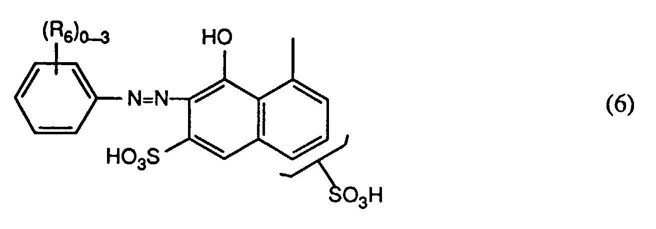 worin R₆ C₁-C₄-Alkyl, C₁-C₄-Alkoxy, Halogen, Carboxy und Sulfo ist. 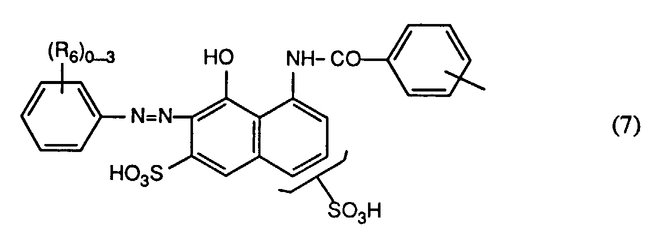 worin R₆ C₁-C₄-Alkyl, C₁-C₄-Alkoxy, Halogen, Carboxy und Sulfo ist. 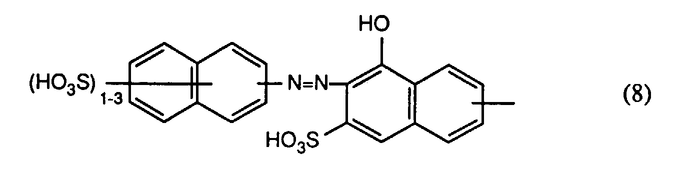 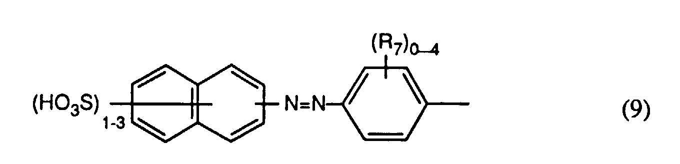 worin R₇ Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo unabhängig voneinander, ist 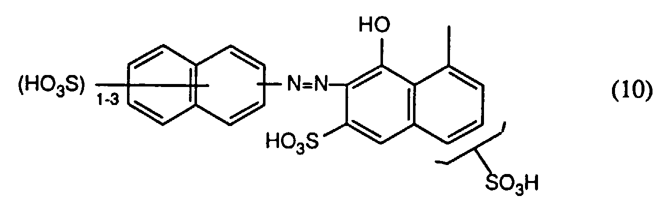 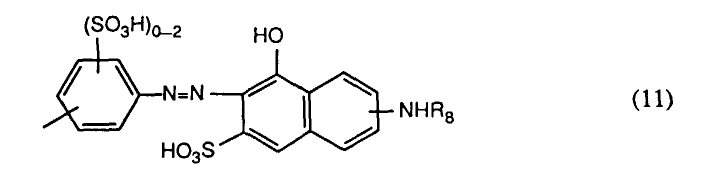 worin R₈ C₁-C₄-Alkanoyl oder Benzoyl ist. 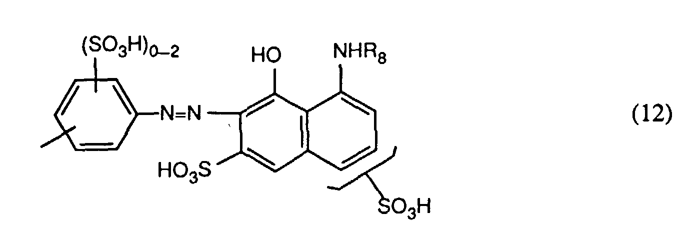 worin R₈ C₁-C₄-Alkanoyl oder Benzoyl ist. 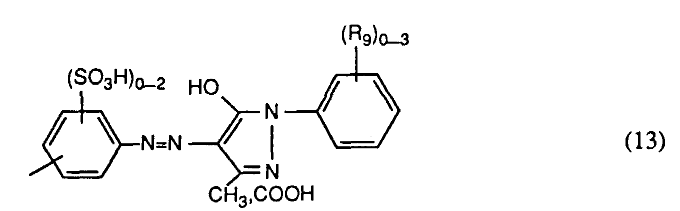 worin R₉ C₁-C₄-Alkyl, C₁-C₄-Alkoxy, Halogen, Carboxy und Sulfo ist. 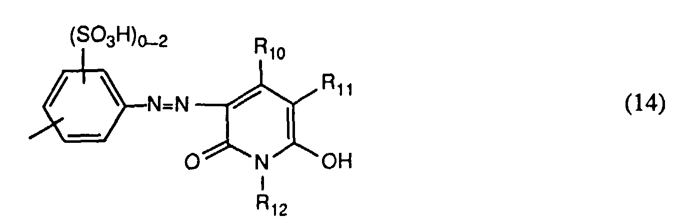 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 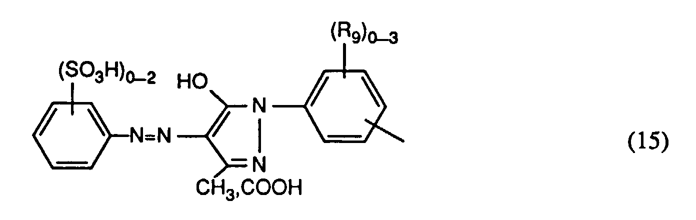 worin R₉ C₁-C₄-Alkyl, C₁-C₄-Alkoxy, Halogen, Carboxy und Sulfo ist. 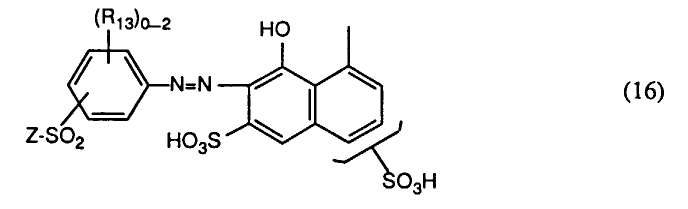 worin R₁₃ C₁-C₄-Alkyl, C₁-C₄-Alkoxy, Halogen, Carboxy und Sulfo ist; und Z β-Sulfatoethyl, β-Thiosulfatoethyl, β-Phosphatoethyl, β-Acyloxyethyl, β-Halogenethyl oder Vinyl ist. 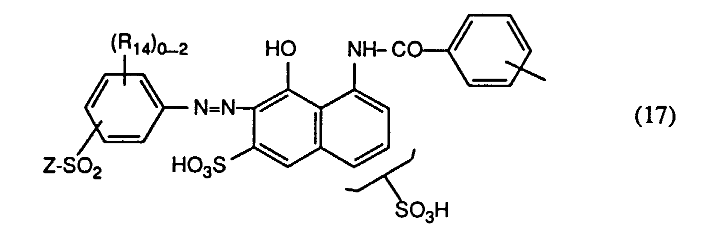 worin R₁₄ für 0 bis 2 Substituenten aus der Gruppe C₁-C₄-Alkyl, C₁-C₄-Alkoxy, Halogen, Carboxy und Sulfo steht; und Z β-Sulfatoethyl, β-Thiosulfatoethyl, β-Phosphatoethyl, β-Acyloxyethyl, β-Halogenethyl oder Vinyl ist.

Besonders wichtig sind ausserdem Schwermetallkomplexe von Reaktivfarbstoffen der Formel (1); als komplexbildende Schwermetalle kommen vor allem Kupfer, Nickel, Kobalt oder Chrom in Betracht. Bevorzugt sind Kupferkomplexazofarbstoffe, insbesondere solche der Formeln (5) bis (15), die das Kupferatom über ein Sauerstoffatom je in ortho-Position zur Azobrücke gebunden enthalten.

Beispiele für Azofarbstoffe, die sich als Metallkomplexe eignen sind:

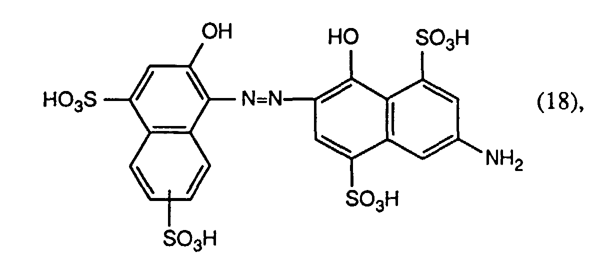

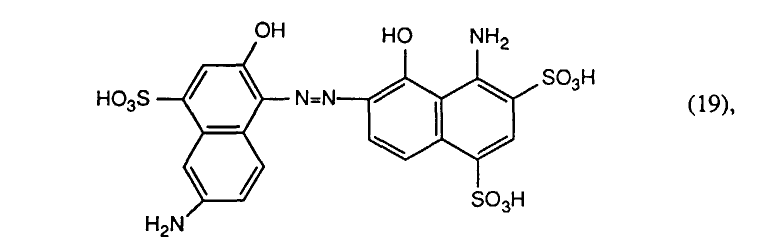

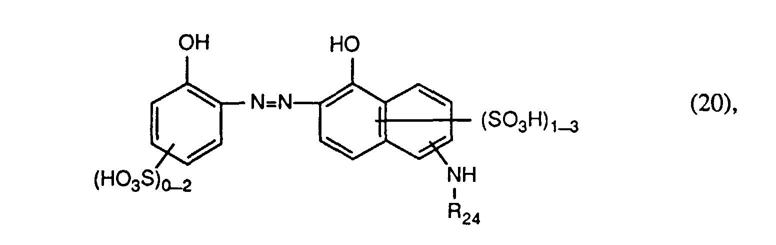

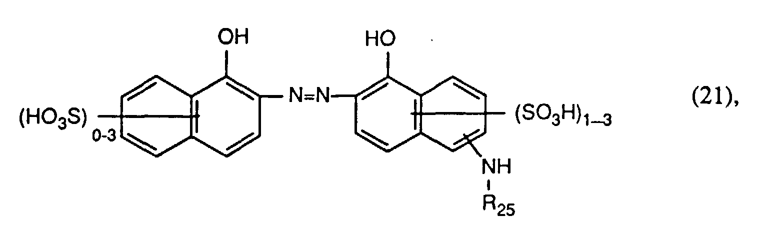

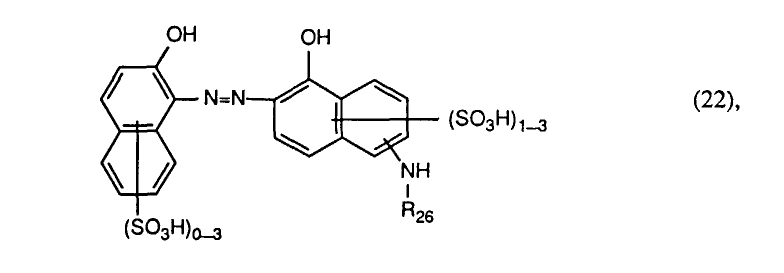

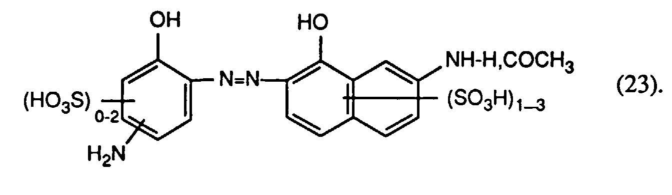

Als Metallatome sind Cu (1:1-Komplex) oder Cr und Co (1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B.solche der Formeln

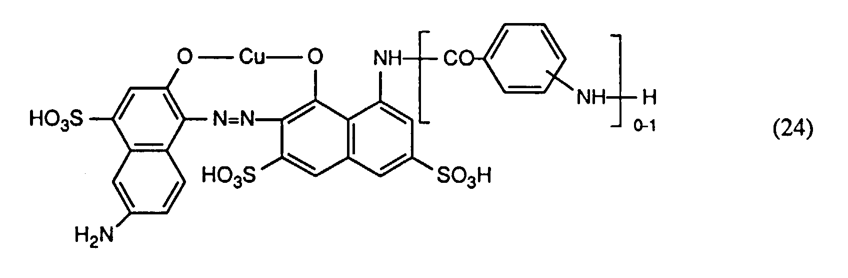

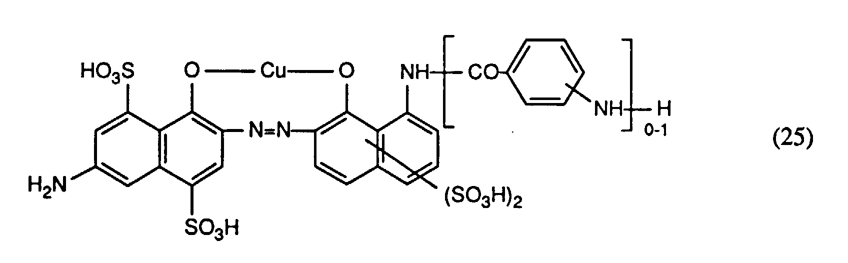

In den oben aufgeführten Formeln bedeuten die Reste R₂₄ bis R₂₆ Wasserstoff oder C₁-C₄-Alkyl. Vorzugsweise bedeuten die Reste R₂₄ bis R₂₆ Wasserstoff, Methyl oder Ethyl. Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Die Reaktivfarbstoffe der Formel (1) können hergestellt werden, indem man einen organischen Farbstoff der Formel 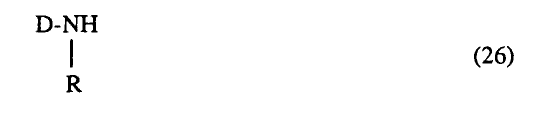 oder ein Farbstoffvorprodukt, ein Äquivalent eines s-Triazins der Formel 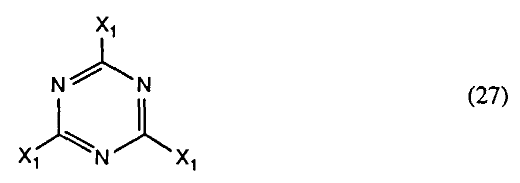 ein Äquivalent eines Diamins der Formel 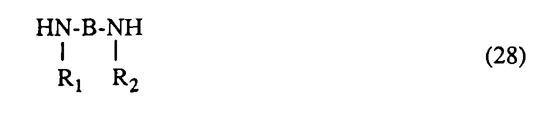 und ein Äquivalent einer den Rest der Formel

-CO-Y (29)

einführenden Verbindung in beliebiger Reihenfolge miteinander umsetzt, wobei D, R, R₁, R₂, B, X und Y die unter Formel (1) angegebenen Bedeutungen haben,und X₁ Halogen bedeutet, oder, im Falle der Verwendung von Farbstoffvorprodukten, die erhaltenen Zwischenprodukte in die gewünschten Endfarbstoffe überführt.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine wichtige Ausführungsform des erfindungsgemässen Verfahrens ist dadurch gekennzeichnet, dass man einen organischen Farbstoff der Formel (26) zunächst mit einem s-Triazin der Formel (27) kondensiert, und die erhaltene Verbindung der Formel 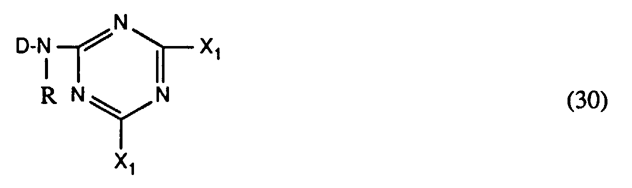 mit einem Diamin der Formel (28) kondensiert, anschliessend das Kondensationsprodukt mit einer den Rest der Formel (29) einführenden Verbindung umsetzt.

Nach einer abgeänderten Ausführungsform des erfindungsgemässen Verfahrens können Reaktivfarbstoffe der Formel (1) auch hergestellt werden, indem man eine Komponente des Farbstoffes der Formel (26), die einen Rest der Formel 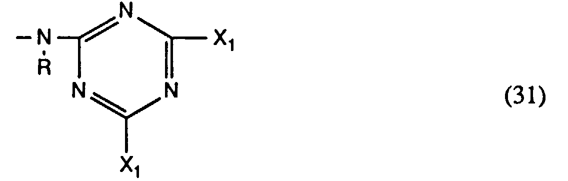 enthält, mit einer zur Herstellung des Farbstoffes benötigten zweiten Komponente umsetzt, und den so erhaltenen Farbstoff der Formel (30) mit einem Diamin der Formel (28) kondensiert, und anschliessend mit einer den Rest der Formel (29) einführenden Verbindung umsetzt.
Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (28), dem Triazin der Formel (27) und dem Farbstoff der Formel (26) oder einem Vorprodukt zweckmässigerweise zuerst ausgeführt wird, die des Triazins mit der Verbindung der Formel (28) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Gegebenenfalls ist eine Ausführungsform anwendbar, bei welcher man von Farbstoffvorprodukten ausgeht. Diese Ausführungsform ist geeignet zur Herstellung von Reaktivfarbstoffen der Formel (1), worin D der Rest eines aus zwei oder mehr als zwei Komponenten zusammengesetzten Farbstoffes ist, beispielsweise eines Monoazo-, Disazo-, Trisazo-oder Metallkomplexazofarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Falls man von Farbstoffvorprodukten ausgeht, gelangt man zu den Reaktivfarbstoffen der Formel (1), indem man z.B. eine Komponente des Farbstoffes der Formel (26), die eine Gruppe -N(R)H enthält, und ein Triazin der Formel (27) kondensiert, vorher oder nachher mit einer Verbindung der Formel (28) kondensiert, dann mit der Verbindung der Formel (29) umsetzt, und anschliessend mit einer weiteren Farbstoffkomponente zu einem Reaktivfarbstoff der Formel (1) umsetzt. Bei der Herstellung der bevorzugten Azofarbstoffe müssen die Diazokomponenten und die Kupplungskomponenten zusammen mindestens eine Aminogruppe -N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem Triazin der Formel (27) durch Verseifen bzw. Reduzieren in die H₂N-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (27) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Bevorzugte Ausführungsformen des erfindungsgemässen Verfahrens sind dadurch gekennzeichnet, dass man
a)einen organischen Farbstoff der Formel (26) verwendet, worin R Wasserstoff, Methyl oder Ethyl ist;
b) ein Diamin der Formel (28) verwendet, worin R₁ Wasserstoff ist;

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

### Farbstoffe der Formel (26)

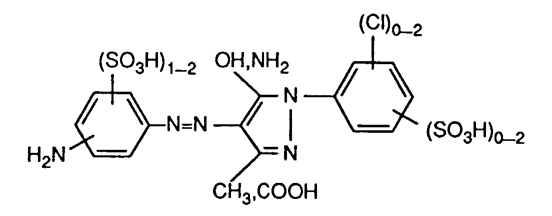

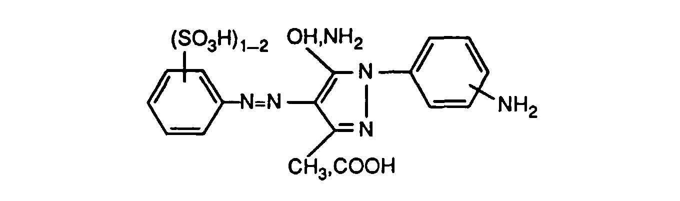

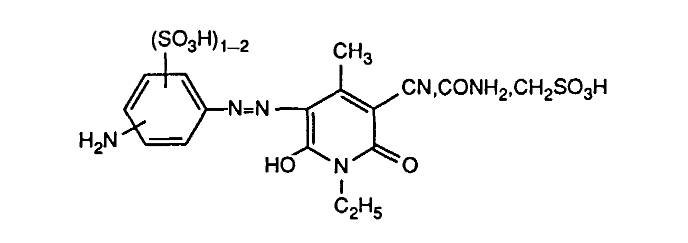

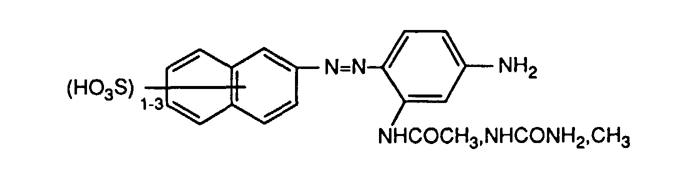

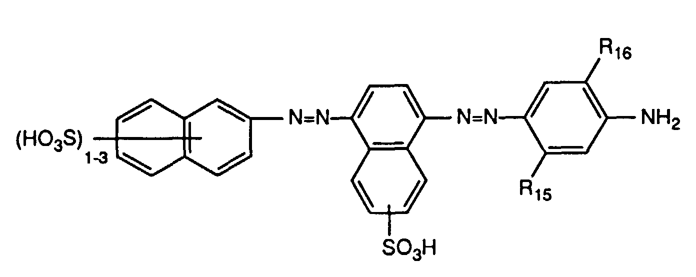

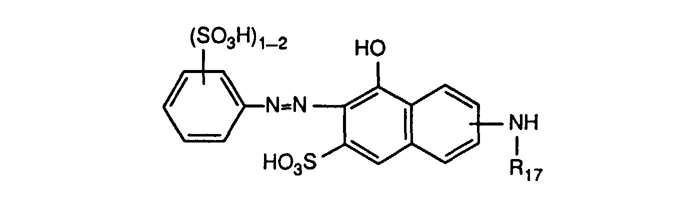

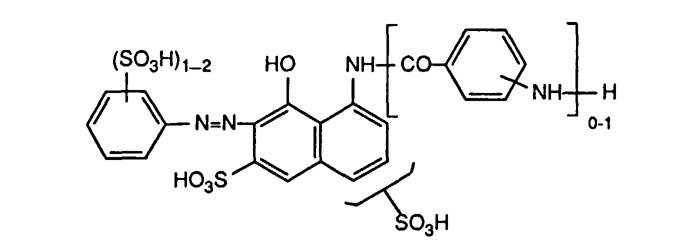

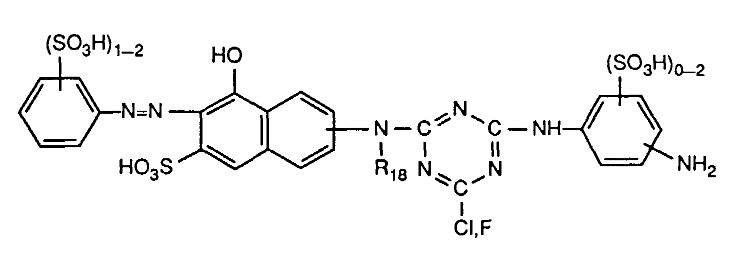

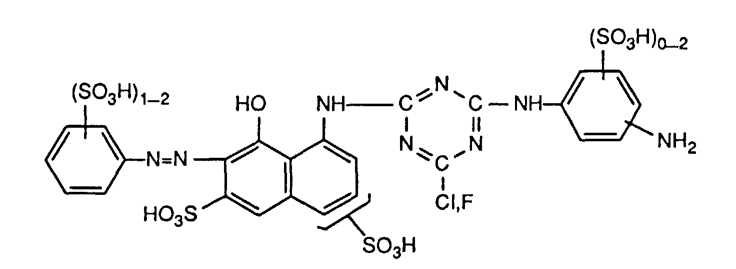

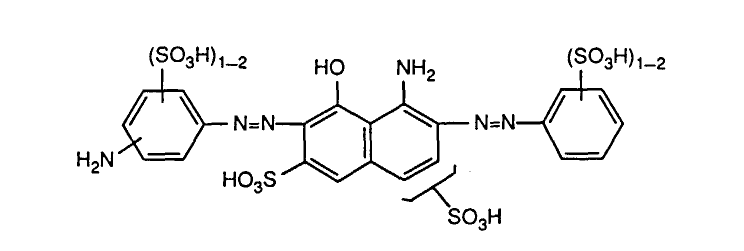

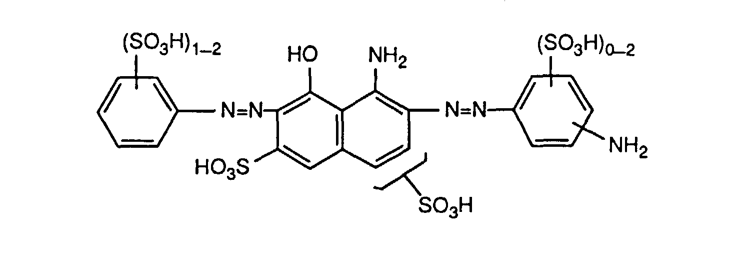

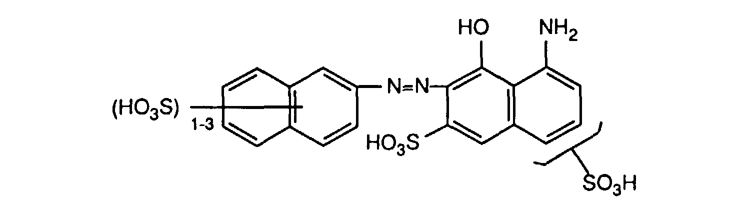

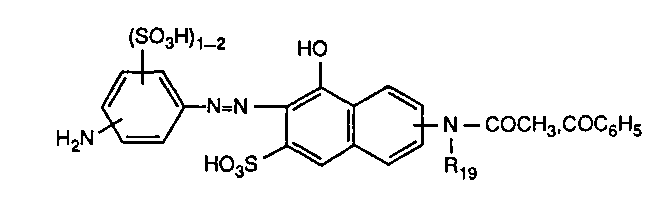

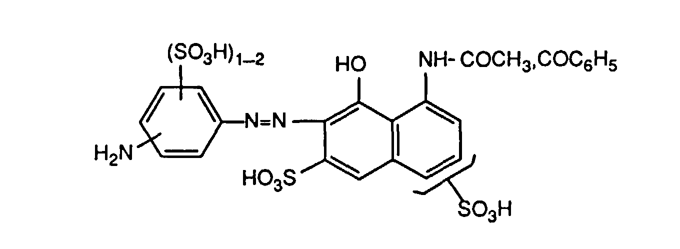

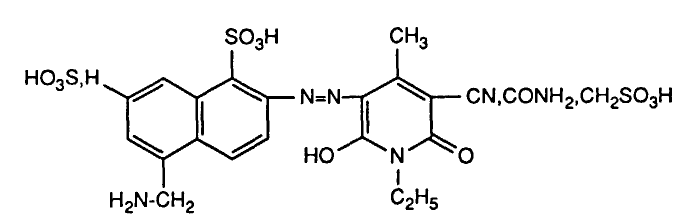

Metallkomplexe von Farbstoffen der Formeln:

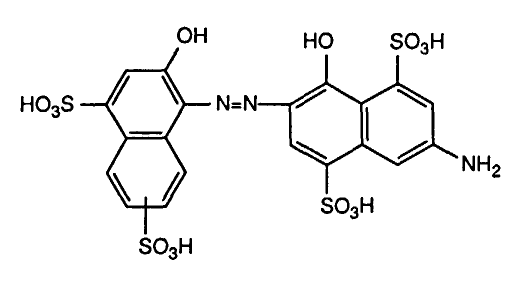

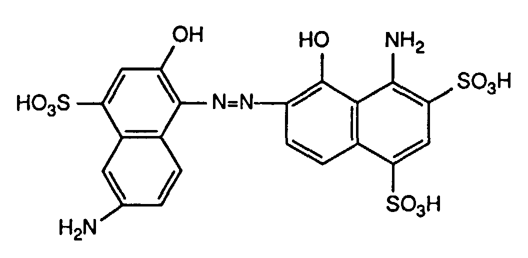

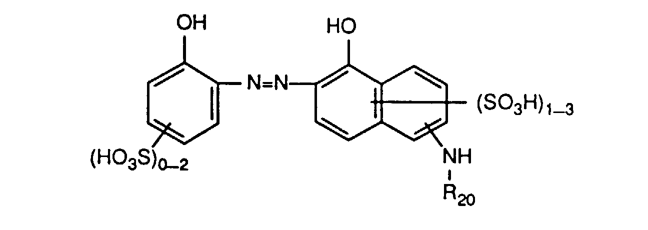

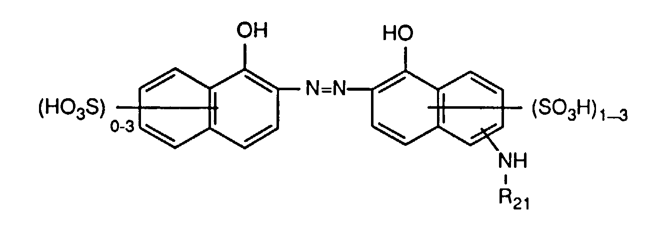

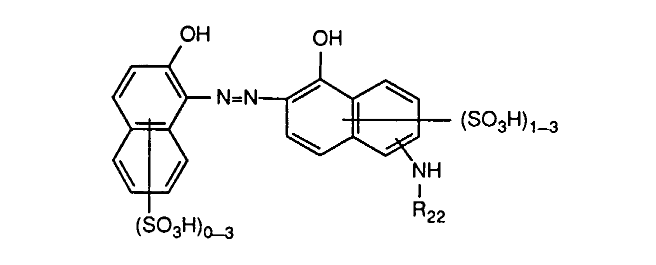

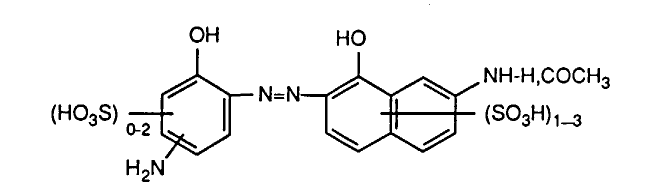

Als Metallatome sind Cu (1:1-Komplex) oder Cr und Co (1:2-Komplex) bevorzugt. Cr-und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

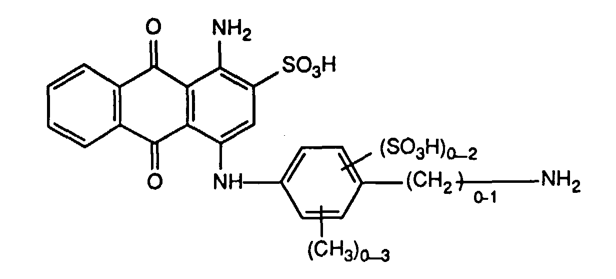

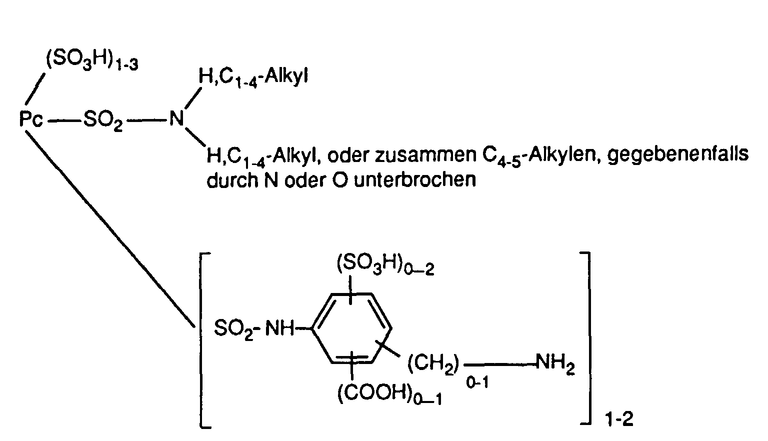

In dieser Formel steht Pc für den Cu- oder Ni-Phthalocyaninrest, die Gesamtzahl der Substituenten am Pc-Gerüst ist 4.

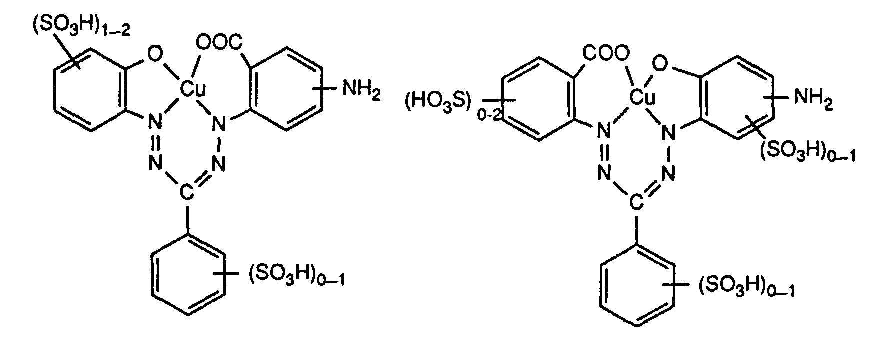

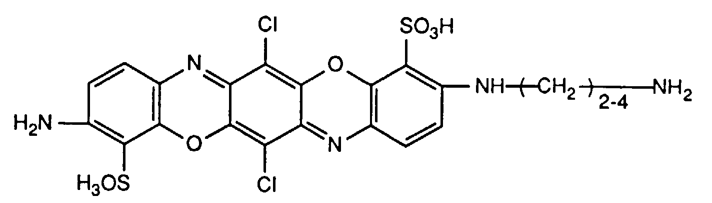

In den oben aufgeführten Formeln bedeuten die Reste R₁₇ bis R₂₂ Wasserstoff oder C₁-C₄-Alkyl, und die Reste R₁₅ und R₁₆ Wasserstoff, C₁-C₄-Alkyl, C₁-C₄-Alkoxy, C₁-C₄-Alkanoylamino, Ureido oder Halogen, wobei die Reste R₁₅ und R₁₆, die zu ein und derselben Formel gehören, voneinander unabhängig sind. Vorzugsweise bedeuten die Reste R₁₇ bis R₂₂ Wasserstoff, Methyl oder Ethyl, und die Reste R₁₅ und R₁₆ Wasserstoff, Methyl, Ethyl, Methoxy, Ethoxy, Acetylamino, Ureido oder Chlor. Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

### Triazine der Formel (27)

2,4,6-Trifluor-s-triazin (Cyanurfluorid), 2,4,6-Trichlor-s-triazin (Cyanurchlorid)

### Diamine der Formel (28)

Ethylendiamin, 1,3-Propylendiamin, 1,2-Propylendiamin, N-Methyl- 1,3-propylendiamin, 4-Aminomethylanilin.

### Den Rest der Formel (29) einführende Verbindungen

Acetanhydrid, Essigsäurechlorid, Propionsäurechlorid, Benzoesäurechlorid.

Die Kondensation eines 2,4,6-Trihalogen-s-triazins mit dem Farbstoff der Formel (26) bzw. den eine Gruppe -N(R)H enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (28) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natrium-carbonat, in einem pH-Bereich von 2 bis 8 bevorzugt 5 bis 6,5, durchgeführt.

Die Kondensation des Halogentriazins mit einer Verbindung der Formel (28) kann vor oder nach der Kondensation des Halogentriazins mit einem Farbstoff der Formel (26) geschehen. Die Kondensation des Halogentriazins mit einer Verbindung der Formel (28) erfolgt vorzugsweise in wässriger Lösung oder Suspension, bei niedriger Temperatur (0 bis 40°C) und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Kondensation der den Rest der Formel (29) einführenden Verbindung mit der Verbindung der Formel (28) bzw. (30) erfolgt vorzugsweise in wässriger Lösung oder Suspension, bei niedrigen Temperaturen (0 bis 10°) und bei schwach saurem, neutralem bis schwach alkalischem pH-Wert. Vorteilhaft wird bei der Kondensation freiwerdender Halogenwasserstoff laufend durch Zugabe wässriger Alkalihydroxide, -carbonate oder -bicarbonate neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Reaktivfarbstoffe der Formel (1) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die erfindungsgemässen Farbstoffe der Formel (1) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triethanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

### Beispiel 1: 27,3 Teile des Farbstoffes der Formel

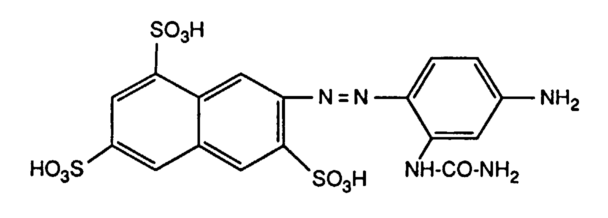

werden in 600 Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5 bis 7 mit 3 bis 5 Teilen Ethylendiamin. Der pH-Wert des Reaktionsgemisches wird durch Zufügen von Natriumcarbonat auf 8,0 und die Temperatur langsam auf 25° erhöht. Nach beendigter Kondensation wird mit 8 bis 15 Teilen Acetanhydrid bei einem pH-Wert von 8 bis 9 acyliert. Anschliessend wird der Farbstoff, der in Form der freien Säure der Formel 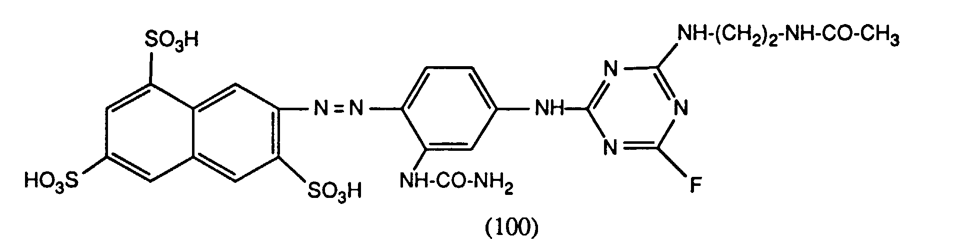 entspricht, nach Zugabe von Puffersalzen mit Natriumchlorid gefällt, filtriert, gewaschen und getrocknet. Der erhaltene Farbstoff stellt ein oranges Pulver dar. Er färbt Baumwolle in goldgelben Tönen.

### Beispiel 2: 27,3 Teile des Farbstoffes der Formel

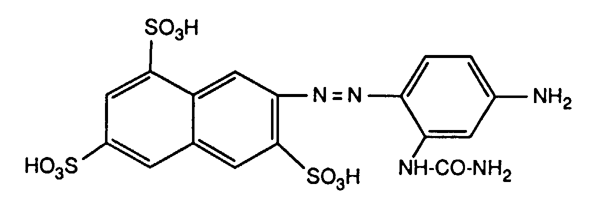

werden in 600 Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5 bis 7 mit 4 bis 6 Teilen 1,3-Propylendiamin. Der pH-Wert des Reaktionsgemisches wird durch Zufügen von Natriumcarbonat auf 8,0 und die Temperatur langsam auf 25° erhöht. Nach beendigter Kondensation wird mit 8 bis 15 Teilen Acetanhydrid bei einem pH-Wert von 8 bis 9 acyliert. Anschliessend wird der Farbstoff, der in Form der freien Säure der Formel 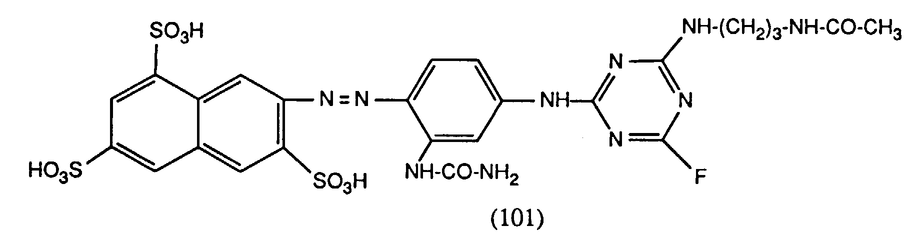 entspricht, nach Zugabe von Puffersalzen mit Natriumchlorid gefällt, filtriert, gewaschen und getrocknet. Der erhaltene Farbstoff stellt ein oranges Pulver dar. Er färbt Baumwolle in goldgelben Tönen.

### Beispiel 3: 27,3 Teile des Farbstoffes der Formel

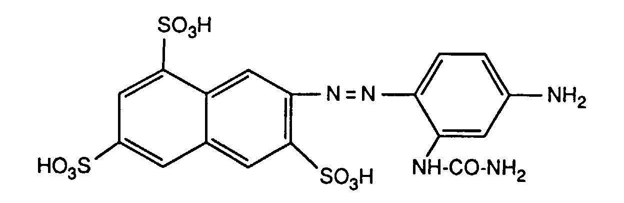

werden in 600 Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5 bis 7 mit 4 bis 5 Teilen 1,2-Propylendiamin. Der pH-Wert des Reaktionsgemisches wird durch Zufügen von Natriumcarbonat auf 7,5 und die Temperatur langsam auf 25° erhöht. Nach beendigter Kondensation wird mit 7 bis 15 Teilen Acetanhydrid bei einem pH-Wert von 8 bis 9 acyliert. Anschliessend wird der Farbstoff, der in Form der freien Säure der Formel 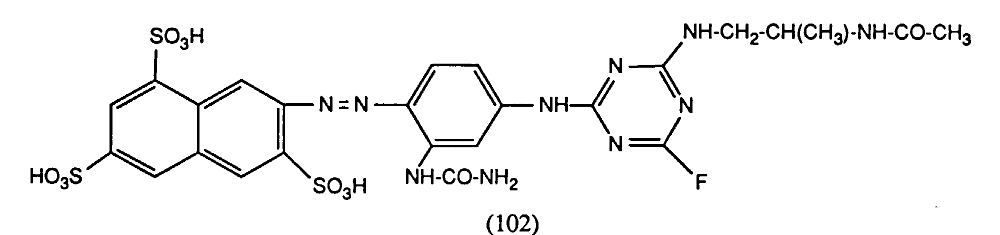 entspricht, nach Zugabe von Puffersalzen mit Natriumchlorid gefällt, filtriert, gewaschen und getrocknet. Der erhaltene Farbstoff stellt ein oranges Pulver dar. Er färbt Baumwolle in goldgelben Tönen.

### Beispiel 4: 27,3 Teile des Farbstoffes der Formel

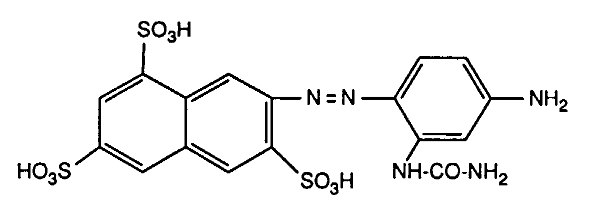

werden in 600 Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5 bis 7 mit 5 bis 6 Teilen N-Methyl- 1,3-propylendiamin. Der pH-Wert des Reaktionsgemisches wird durch Zufügen von Natriumcarbonat auf 7,5 und die Temperatur langsam auf 25° erhöht. Nach beendigter Kondensation wird mit 11 bis 15 Teilen Acetanhydrid bei einem pH-Wert von 8 bis 10 acyliert. Anschliessend wird der Farbstoff, der in Form der freien Säure der Formel 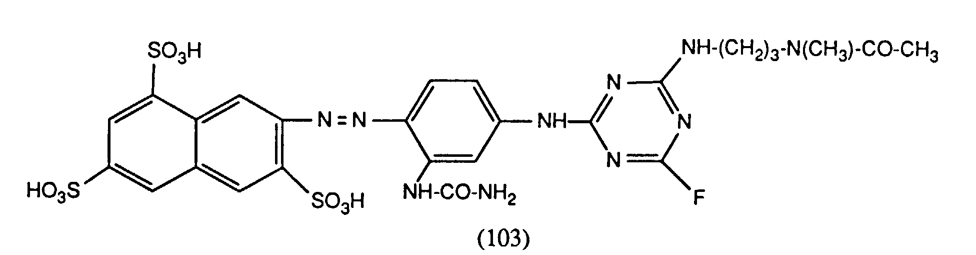 entspricht, nach Zugabe von Puffersalzen mit Natriumchlorid gefällt, filtriert, gewaschen und getrocknet. Der erhaltene Farbstoff stellt ein oranges Pulver dar. Er färbt Baumwolle in goldgelben Tönen.

### Beispiel 5: 27,3 Teile des Farbstoffes der Formel

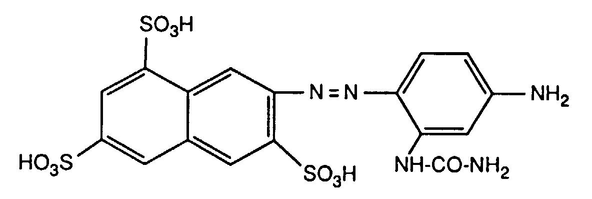

werden in 600 Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und bei einem pH-Wert von 4,5 mit 10 bis 12 Teilen der Verbindung der Formel

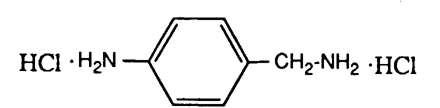

Der pH-Wert des Reaktionsgemisches wird durch Zufügen von Natriumcarbonat auf 7,5 und die Temperatur langsam auf 25° erhöht. Nach beendigter Kondensation wird mit 7 bis 12 Teilen Acetanhydrid bei einem pH-Wert von 8 bis 9 acyliert. Anschliessend wird der Farbstoff, der in Form der freien Säure der Formel 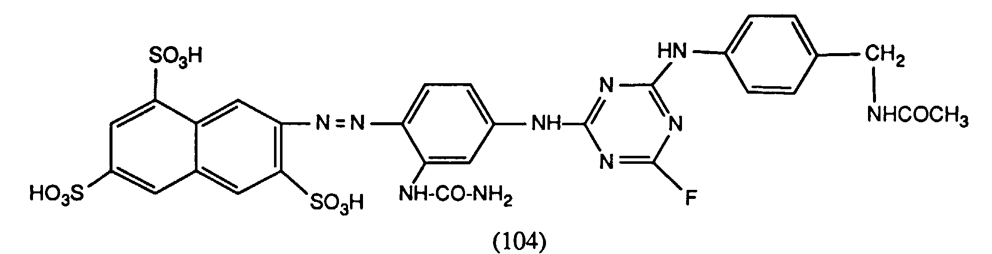 entspricht, nach Zugabe von Puffersalzen mit Natriumchlorid gefällt, filtriert, gewaschen und getrocknet. Der erhaltene Farbstoff stellt ein oranges Pulver dar. Er färbt Baumwolle in goldgelben Tönen.

Verfährt man, wie in den Beispielen 1 bis 5 angegeben, setzt jedoch statt des dort verwendeten Chromophors der Formel 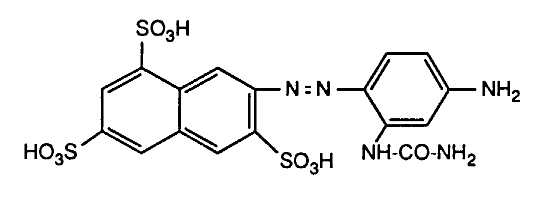 äquivalente Mengen der in der folgenden Tabelle in Kolonne I angegebenen Verbindungen ein, und führt in diese einen Rest der Formel 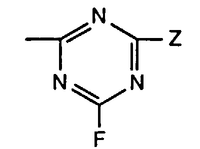 ein, worin Z einen der folgenden Reste bedeutet:

-NH(CH₂)₂NHCOCH₃,

-NH(CH₂)₃NHCOCH₃

-NH-CH₂-CH(CH₃)-NHCOCH₃,

-NH-(CH₂)₃-N(CH₃)-COCH₃,

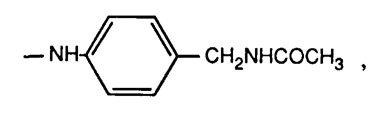

-NH(CH₂)₂-NHCO(CH₂)₂-COOH,

so erhält man weitere wertvolle Farbstoffe, die Baumwolle in den in Kolonne II angegebenen Tönen färben.

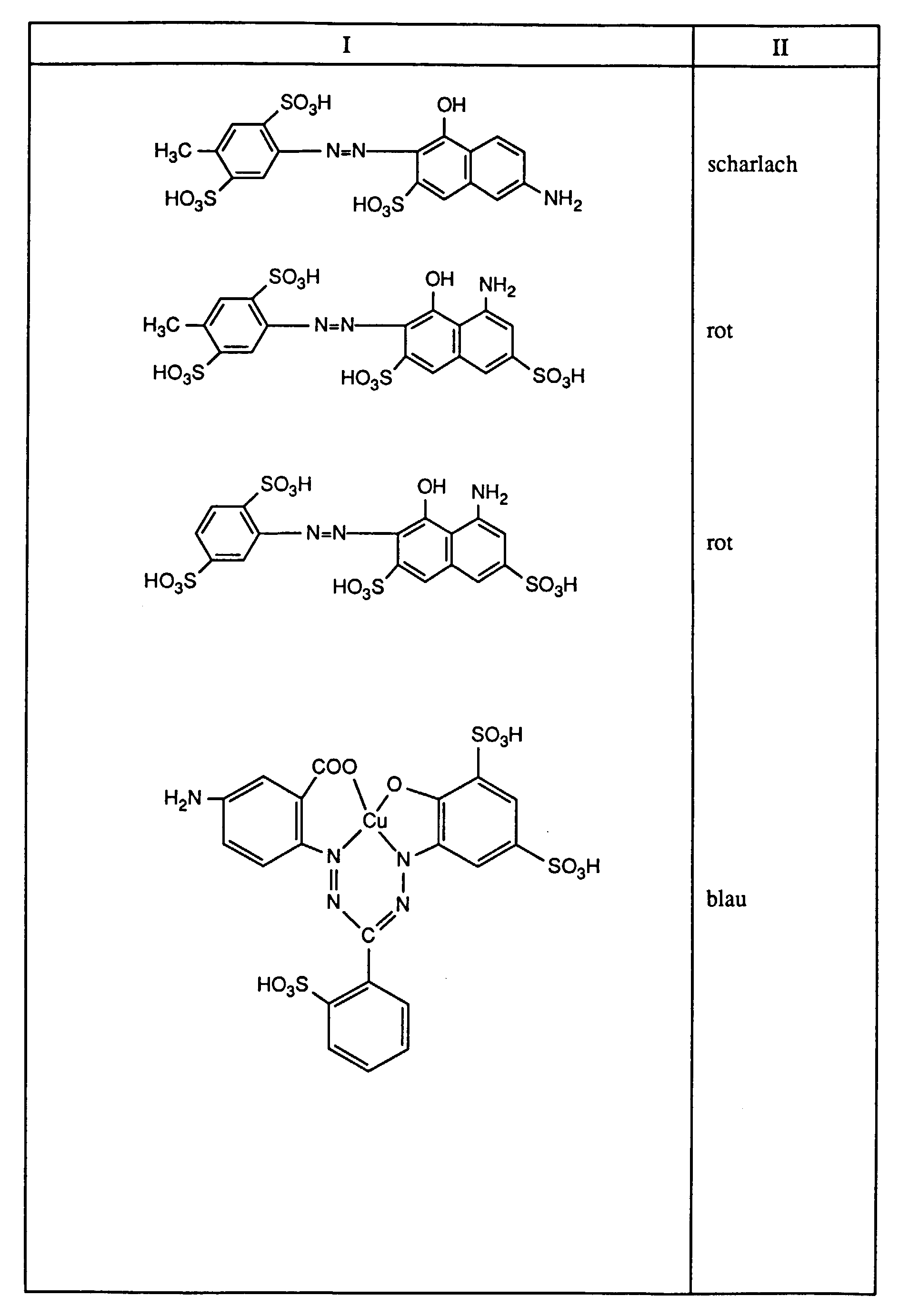

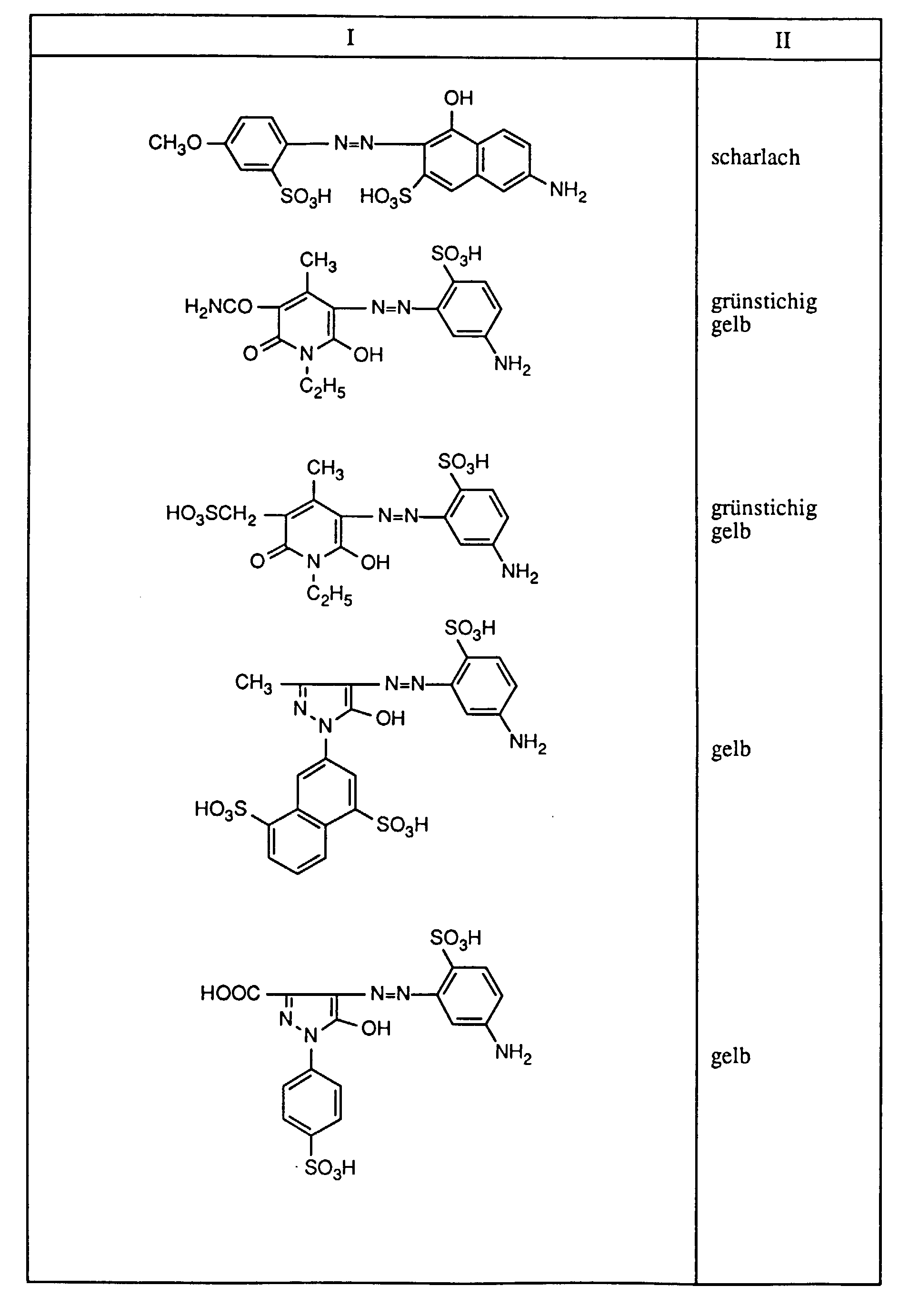

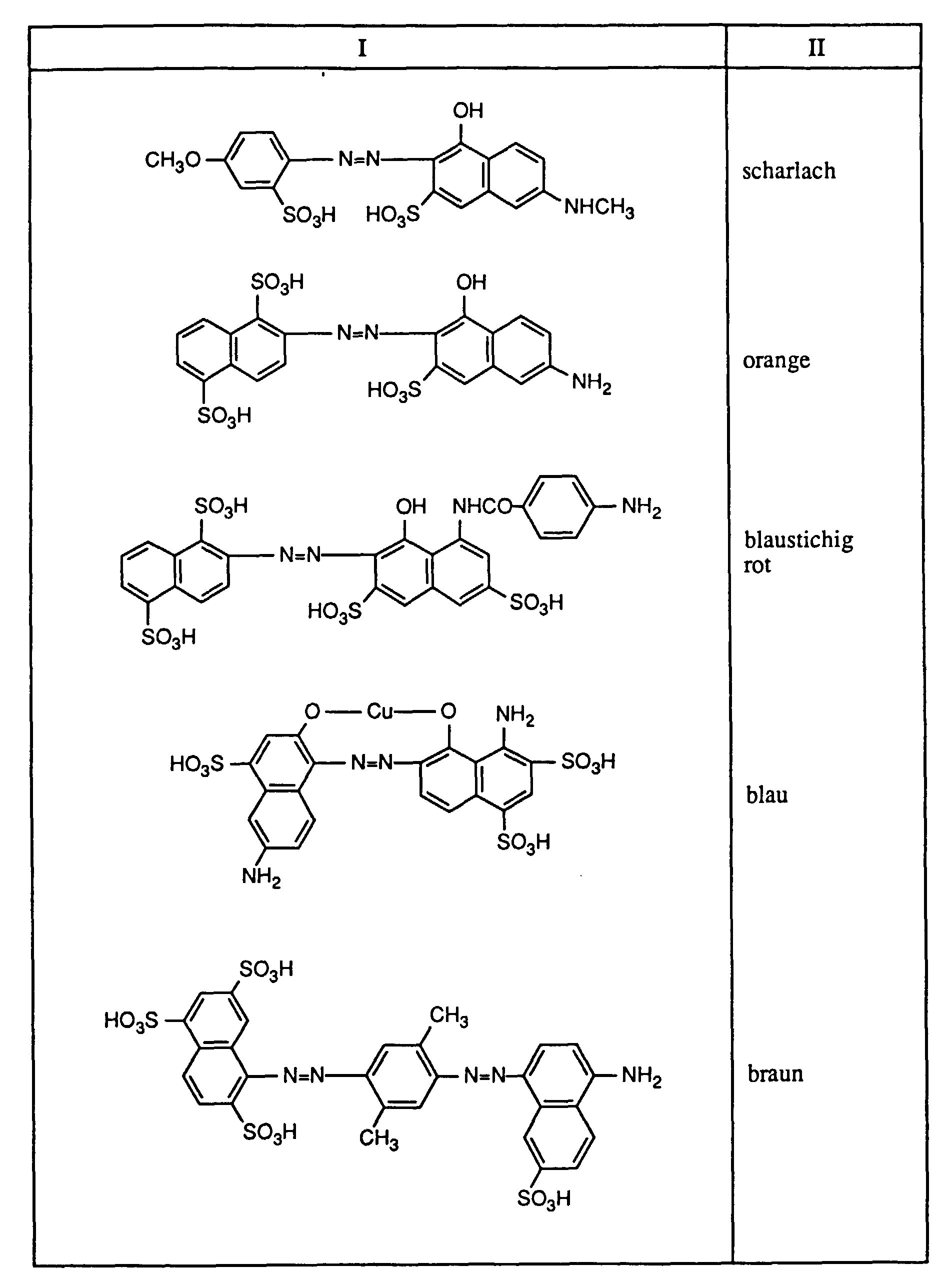

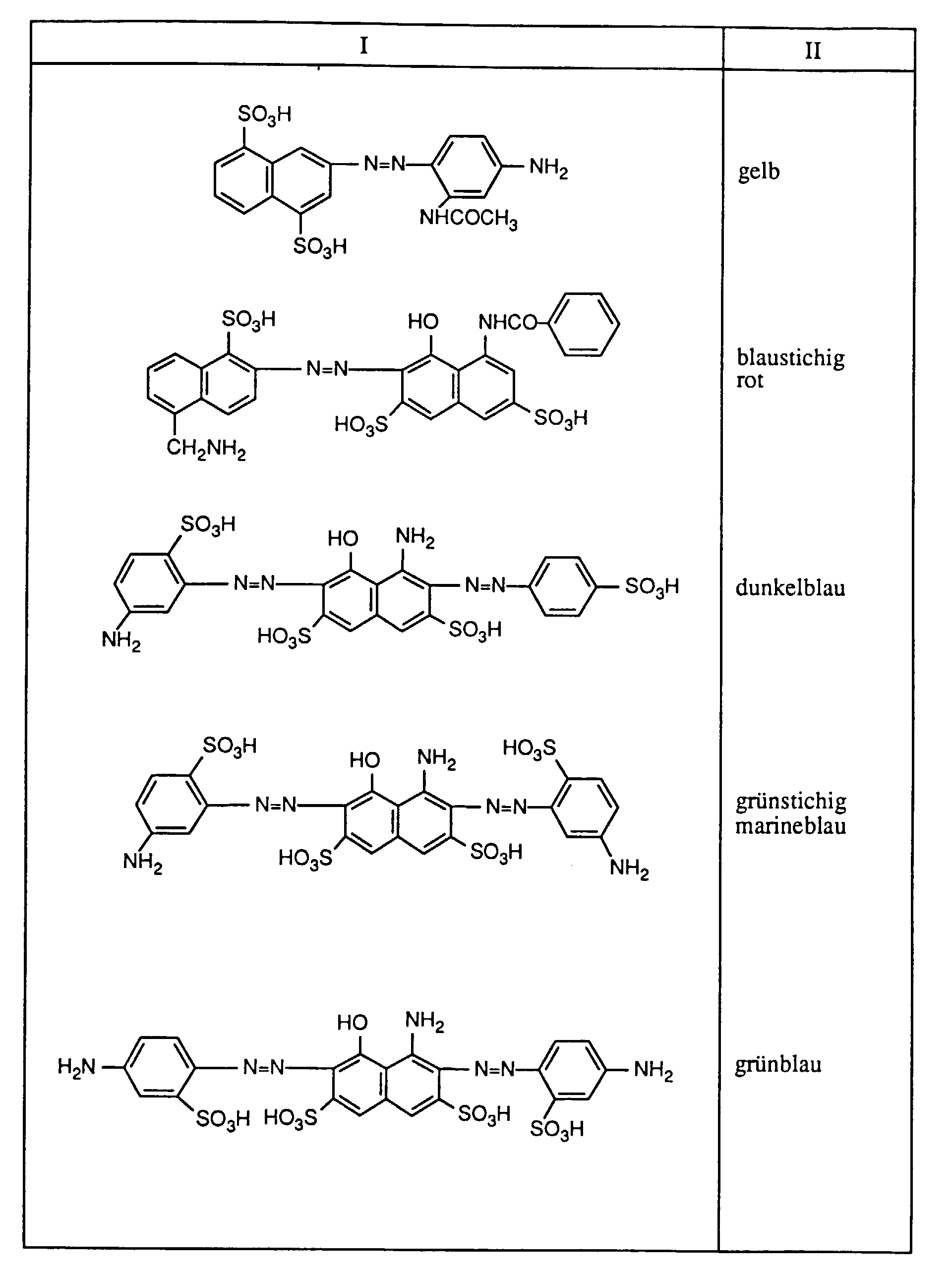

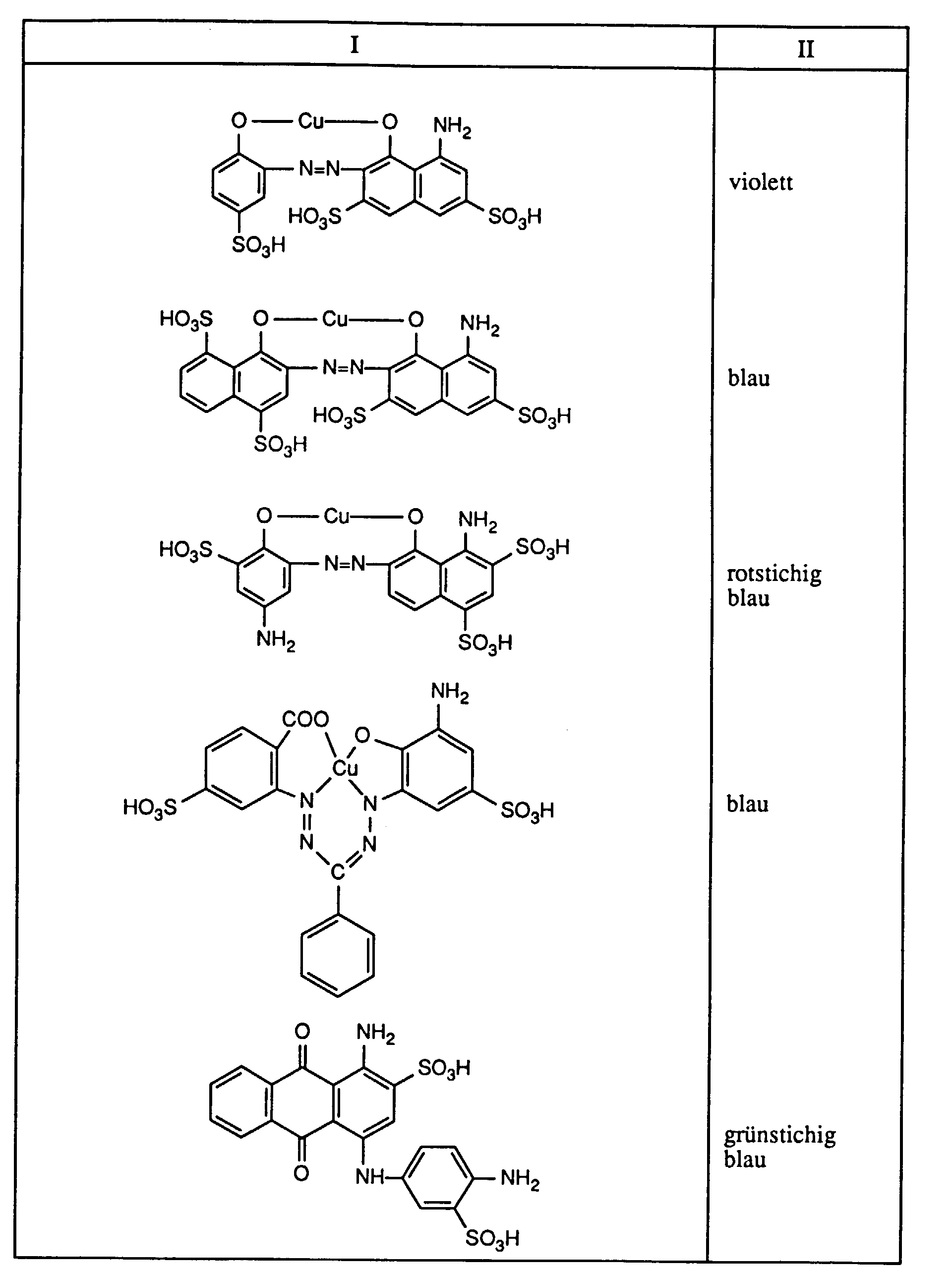

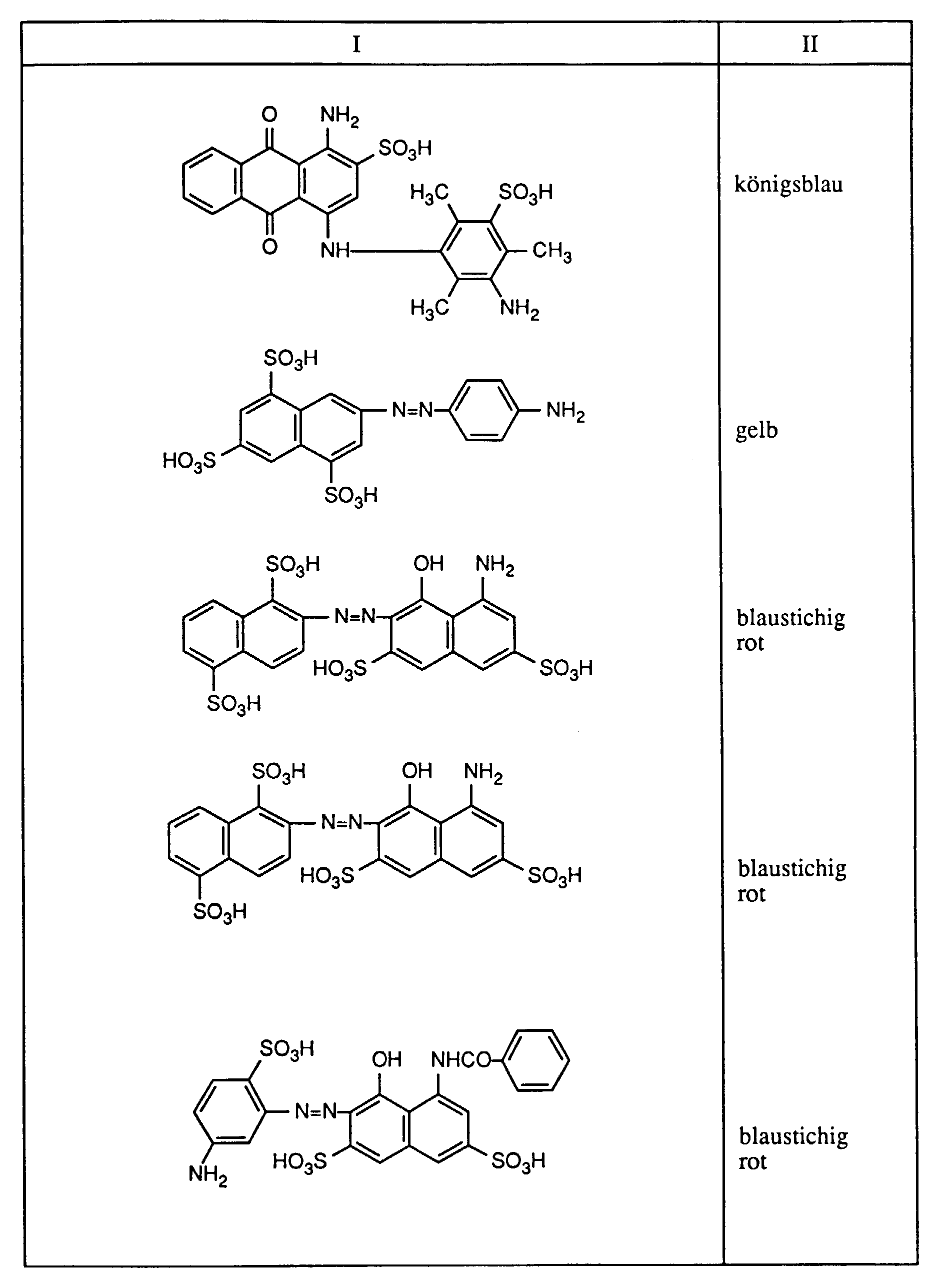

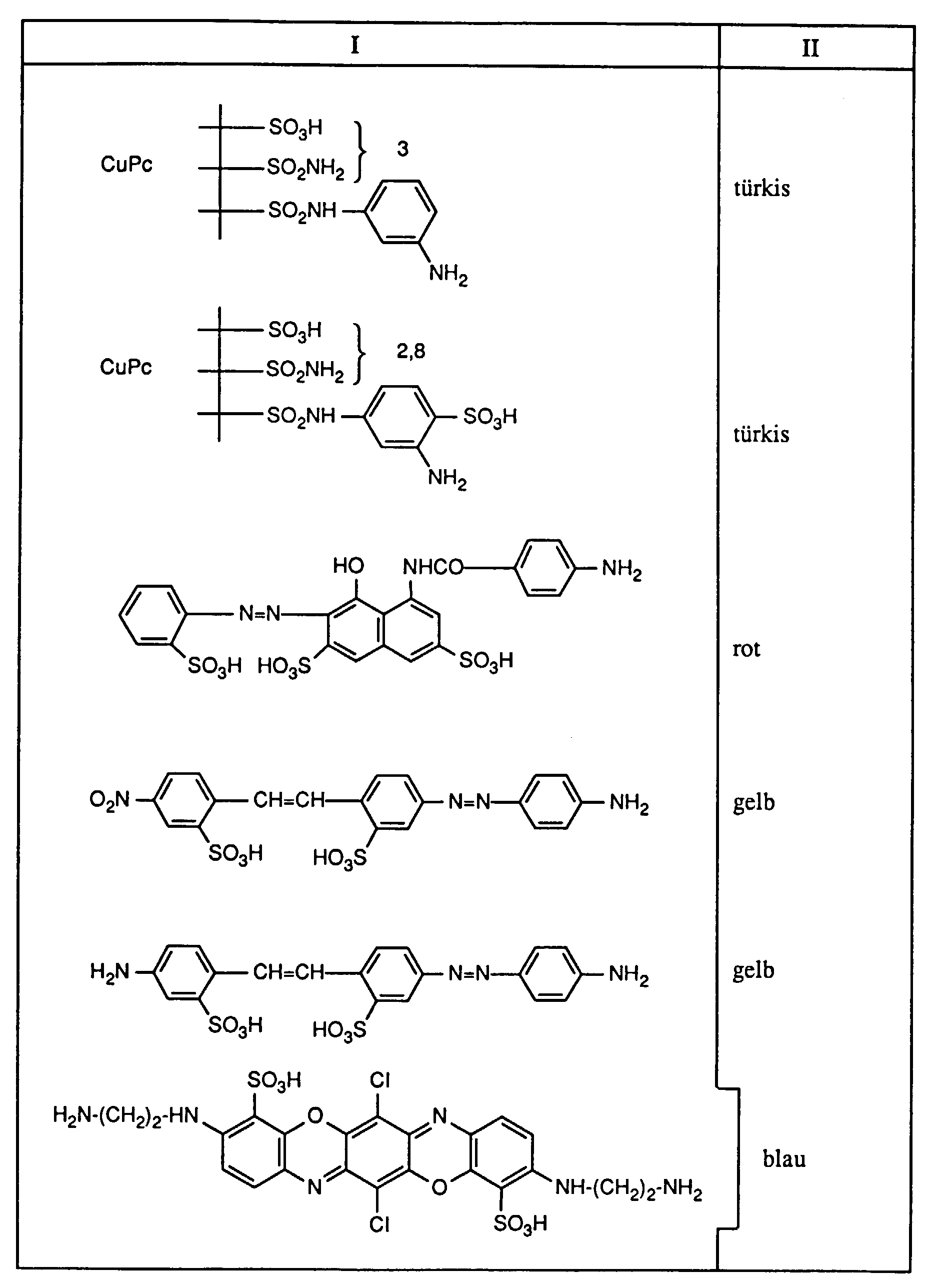

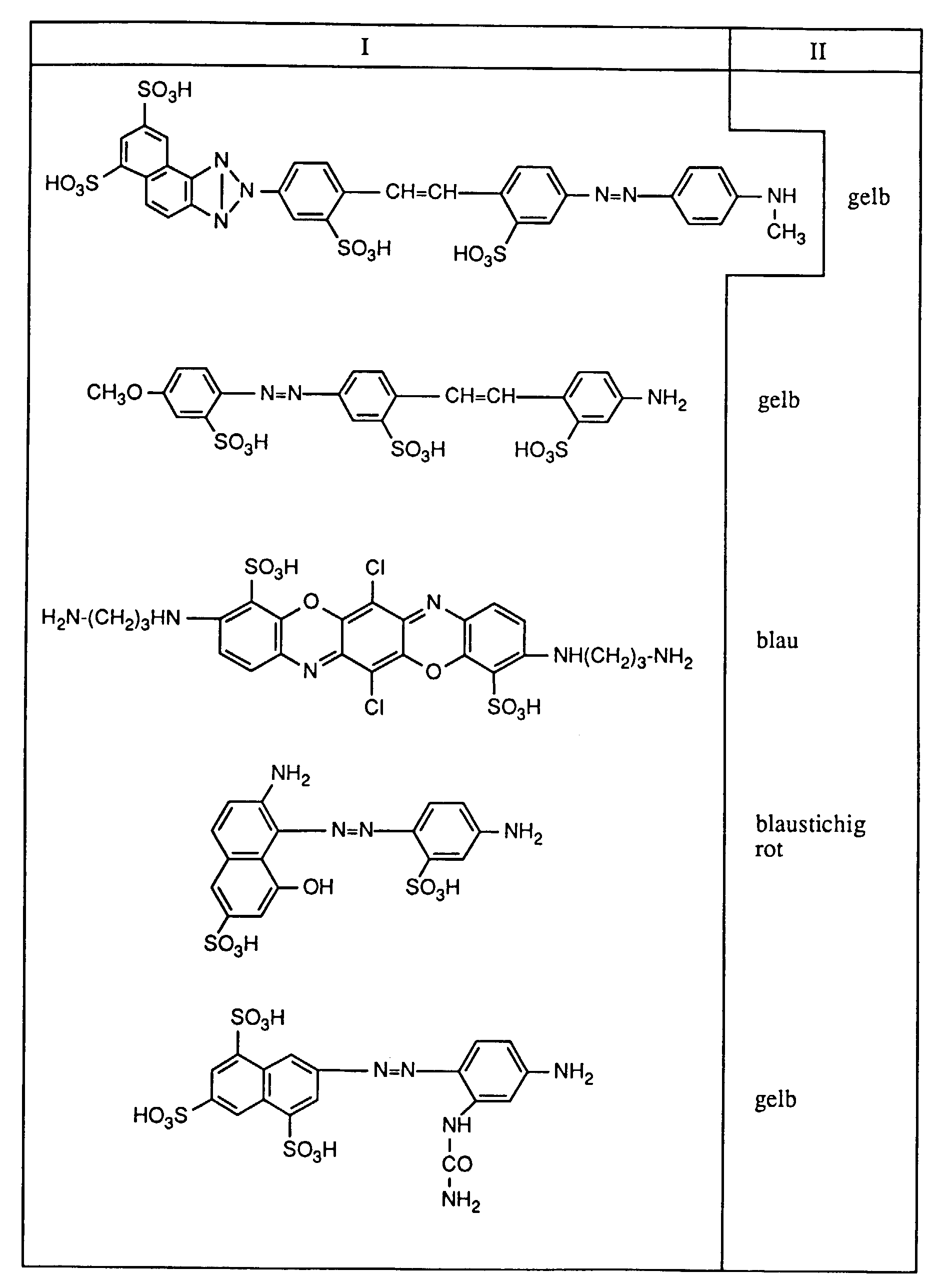

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nicht-ionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38%ig) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche (Patentansprüche für folgende(n) Vertragsstaat(en): BE, CH, DE, FR, GB, IT, LI)

1. Reaktivfarbstoffe der Formel 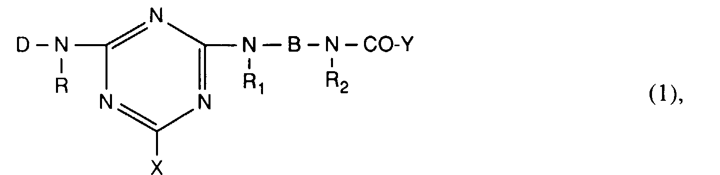 worin
D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes;
R Wasserstoff oder Alkyl mit 1 bis 4 Kohlenstoffatomen, das durch Hydroxy, Cyan, Carboxy, Sulfo oder Sulfato substituiert sein kann;
X Fluor oder Chlor;
R₁ Wasserstoff, Alkyl mit 1 bis 4 Kohlenstoffatomen, das durch Halogen, Hydroxy, Cyan, C₁-C₄-Alkoxy, C₁-C₄-Alkoxycarbonyl, Carboxy, Carbamoyl, Sulfamoyl, Sulfo oder Sulfato substituiert sein kann, oder ein Rest der Formel 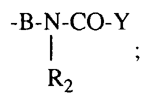 und
der Rest 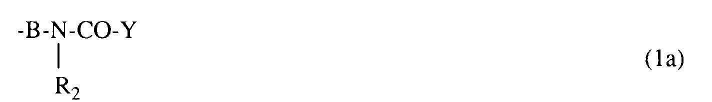 ein Rest der Formel 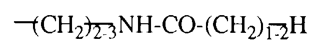 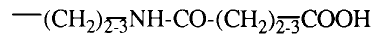 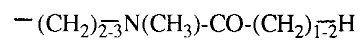 oder 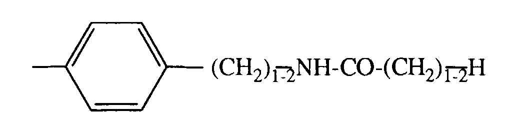 sind; oder worin der Rest 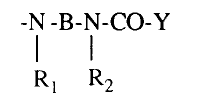 die Gruppe -NH-CH₂-CH(CH₃)-NHCOCH₃ bedeutet.

2. Reaktivfarbstoffe gemäss Anspruch 1, worin R Wasserstoff, Methyl oder Ethyl ist.

3. Reaktivfarbstoffe gemäss Anspruch 1 oder 2, worin D der Rest eines Monoazo-, Disazo-, Phthalocyanin-, Formazan- oder Dioxazinfarbstoffes ist.

4. Verfahren zur Herstellung von Reaktivfarbstoffen der Formel (1) gemäss Anspruch 1, dadurch gekennzeichnet, dass man einen organischen Farbstoff der Formel 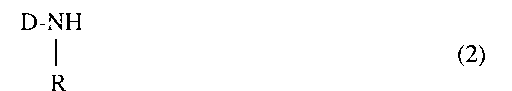 oder ein Farbstoffvorprodukt, ein Äquivalent eines s-Triazins der Formel 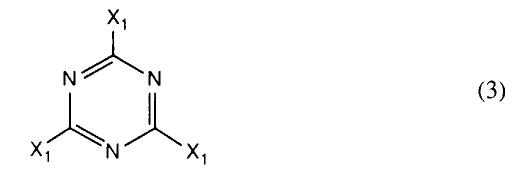 ein Äquivalent eines Diamins der Formel 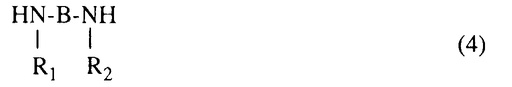 und ein Äquivalent einer den Rest der Formel
-CO-Y (5)
einführenden Verbindung in beliebiger Reihenfolge miteinander umsetzt, wobei D, R, R₁, R₂, B, X und Y die in Anspruch 1 angegebenen Bedeutungen haben,und X₁ Halogen bedeutet, oder, im Falle der Verwendung von Farbstoffvorprodukten, die erhaltenen Zwischenprodukte in die gewünschten Endfarbstoffe überführt.

5. Verwendung der Reaktivfarbstoffe gemäss Anspruch 1 zum Färben oder Bedrucken von cellulosehaltigen Fasermaterialien.

6. Verwendung gemäss Anspruch 5 zum Färben oder Bedrucken von Baumwolle.

## Patentansprüche (Patentansprüche für folgende(n) Vertragsstaat(en): ES)

1. Verfahren zur Herstellung von Reaktivfarbstoffen der Formel 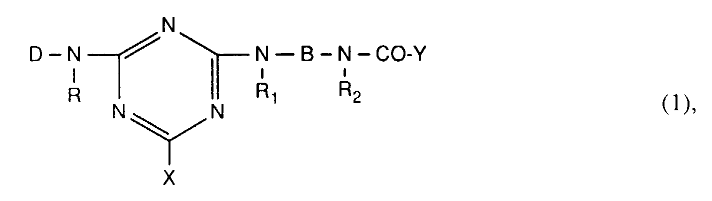 worin
D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes;
R Wasserstoff oder Alkyl mit 1 bis 4 Kohlenstoffatomen, das durch Hydroxy, Cyan, Carboxy, Sulfo oder Sulfato substituiert sein kann;
X Fluor oder Chlor;
R₁ Wasserstoff, Alkyl mit 1 bis 4 Kohlenstoffatomen, das durch Halogen, Hydroxy, Cyan, C₁-C₄-Alkoxy, C₁-C₄-Alkoxycarbonyl, Carboxy, Carbamoyl, Sulfamoyl, Sulfo oder Sulfato substituiert sein kann, oder ein Rest der Formel 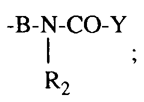 und
der Rest 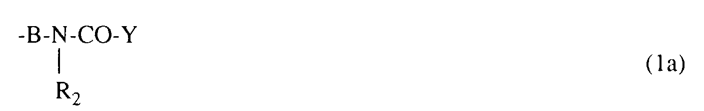 ein Rest der Formel 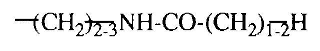 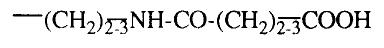 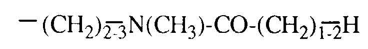 oder 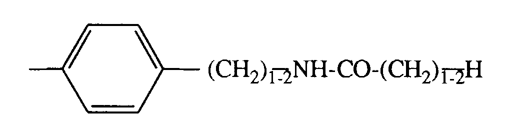 sind; oder worin der Rest 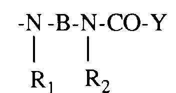 die Gruppe -NH-CH₂-CH(CH₃)-NHCOCH₃ bedeutet,
dadurch gekennzeichnet, dass man einen organischen Farbstoff der Formel 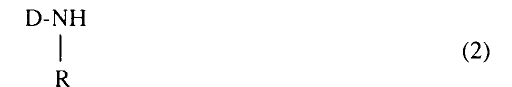 oder ein Farbstoffvorprodukt, ein Äquivalent eines s-Triazins der Formel 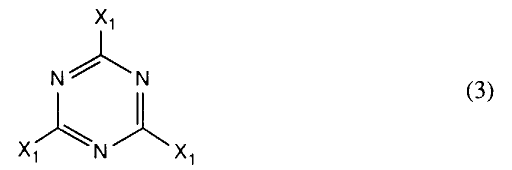 ein Äquivalent eines Diamins der Formel 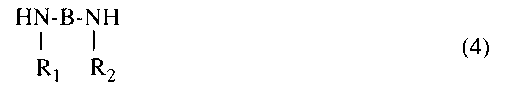 und ein Äquivalent einer den Rest der Formel
-CO-Y (5)
einführenden Verbindung in beliebiger Reihenfolge miteinander umsetzt, wobei D, R, R₁, R₂, B, X und Y die oben angegebenen Bedeutungen haben,und X₁ Halogen bedeutet, oder, im Falle der Verwendung von Farbstoffvorprodukten, die erhaltenen Zwischenprodukte in die gewünschten Endfarbstoffe überführt.

2. Verfahren gemäss Anspruch 1 zur Herstellung von Reaktivfarbstoffen, worin R Wasserstoff, Methyl oder Ethyl ist.

3. Verfahren gemäss Anspruch 1 zur Herstellung von Reaktivfarbstoffen, worin D der Rest eines Monoazo-, Disazo-, Phthalocyanin-, Formazan- oder Dioxazinfarbstoffes ist.

4. Verwendung der Reaktivfarbstoffe gemäss Anspruch 1 zum Färben oder Bedrucken von cellulosehaltigen Fasermaterialien.

5. Verwendung gemäss Anspruch 4 zum Färben oder Bedrucken von Baumwolle.

## Claims (Claims for the following Contracting State(s): BE, CH, DE, FR, GB, IT, LI)

1. A reactive dye of the formula 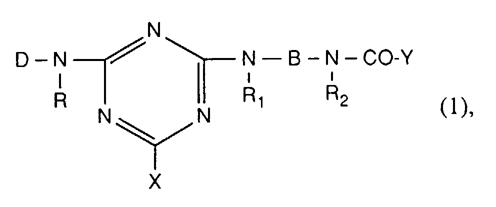 in which
D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye;
R is hydrogen or alkyl having 1 to 4 carbon atoms, which can be substituted by hydroxyl, cyano, carboxyl, sulfo or sulfato;
X is fluorine or chlorine;
R₁ is hydrogen, alkyl having 1 to 4 carbon atoms, which can be substituted by halogen, hydroxyl, cyano, C₁-C₄alkoxy, C₁-C₄alkoxycarbonyl, carboxyl, carbamoyl, sulfamoyl, sulfo or sulfato, or is a radical of the formula 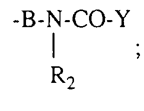 and
the radical 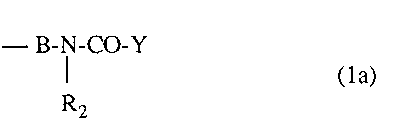 is a radical of the formula 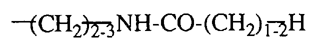 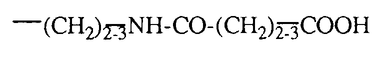 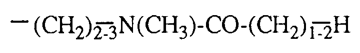 or 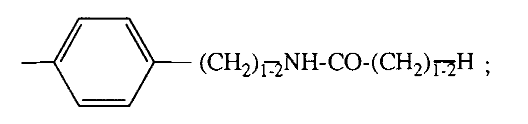 or in which the radical 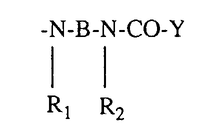 is the group -NH-CH₂-CH(CH₃)-NHCOCH₃.

2. A reactive dye according to claim 1, in which R is hydrogen, methyl or ethyl.

3. A reactive dye according to claim 1 or 2, in which D is the radical of a monoazo, disazo, phthalocyanine, formazan or dioxazine dye.

4. A process for the preparation of a reactive dye of the formula (1) according to claim 1, which comprises reacting an organic dye of the formula 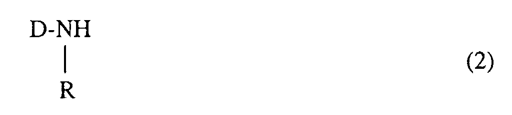 or a dye precursor, one equivalent of an s-triazine of the formula 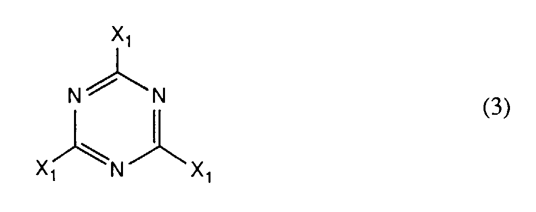 one equivalent of a diamine of the formula 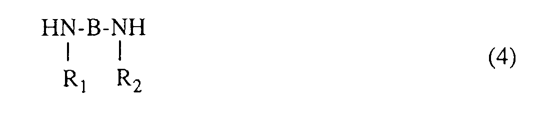 and one equivalent of a compound which introduces the radical of the formula
-CO-Y (5)
with one another in any order, D, R, R₁, R₂, B, X and Y being as defined in claim 1 and X₁ being halogen, or, if a dye precursor is used, converting the resulting intermediate into the desired end dye.

5. Use of a reactive dye according to claim 1 for dyeing or printing cellulosic fibre materials.

6. Use according to claim 5 for dyeing or printing cotton.

## Claims (Claims for the following Contracting State(s): ES)

1. A process for the preparation of a reactive dye of the formula 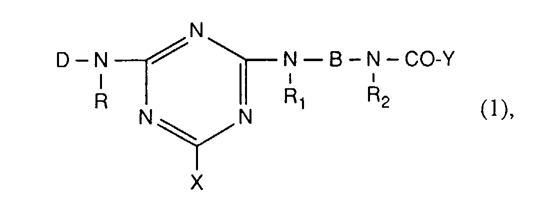 in which
D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye;
R is hydrogen or alkyl having 1 to 4 carbon atoms, which can be substituted by hydroxyl, cyano, carboxyl, sulfo or sulfato;
X is fluorine or chlorine;
R₁ is hydrogen, alkyl having 1 to 4 carbon atoms, which can be substituted by halogen, hydroxyl, cyano, C₁-C₄alkoxy, C₁-C₄alkoxycarbonyl, carboxyl, carbamoyl, sulfamoyl, sulfo or sulfato or is a radical of the formula 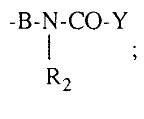 and
the radical 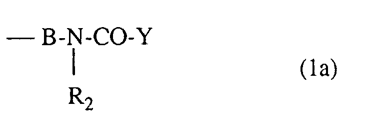 is a radical of the formula 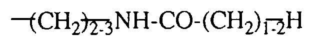 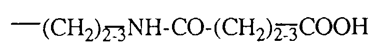 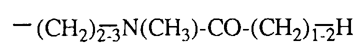 or 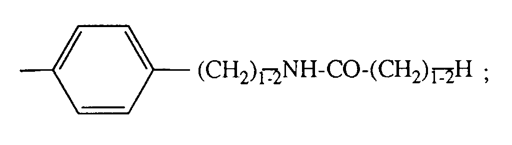 or in which the radical 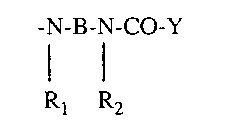 is the group -NH-CH₂-CH(CH₃)-NHCOCH₃,
which comprises reacting an organic dye of the formula 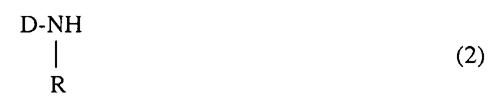 or a dye precursor, one equivalent of an s-triazine of the formula 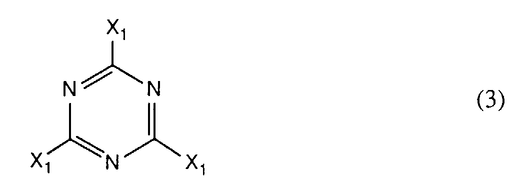 one equivalent of a diamine of the formula 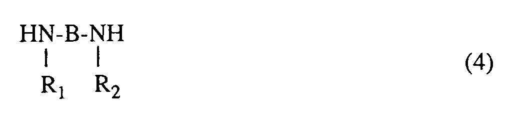 and one equivalent of a compound which introduces the radical of the formula
-CO-Y (5)
with one another in any order, D, R, R₁, R₂, B, X and Y being as defined above and X₁ being halogen, or, if a dye precursor is used, converting the resulting intermediate into the desired end dye.

2. A process according to claim 1 for the preparation of a reactive dye, in which R is hydrogen, methyl or ethyl.

3. A process according to claim 1 for the preparation of a reactive dye, in which D is the radical of a monoazo, disazo, phthalocyanine, formazan or dioxazine dye.

4. Use of a reactive dye according to claim 1 for dyeing or printing cellulosic fibre materials.

5. Use according to claim 4 for dyeing or printing cotton.

## Revendications (Revendications pour l'(les) Etat(s) contractant(s) suivant(s): BE, CH, DE, FR, GB, IT, LI)

1. Colorants réactifs de formule 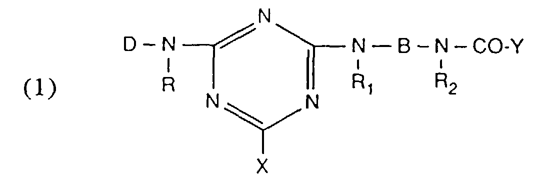 dans laquelle
D représente le résidu d'un colorant monoazoïque, polyazoïque, azoïque métallifère, anthraquinonique, phtalocyanine, formazan, azométhinique, dioxazinique, phénazinique, stilbénique, triphénylméthane, xanthène, thioxanthone, nitroarylique, naphtoquinonique, pyrènequinonique ou de type pérylène-tétracarbimide,
R représente un atome d'hydrogène ou un groupe alkyle en C₁₋₄ pouvant être substitué par un résidu hydroxy, cyano, carboxy, sulfo ou sulfato,
X représente un atome de fluor ou de chlore,
R₁ représente un atome d'hydrogène, un résidu alkyle en C₁₋₄ pouvant être substitué par un atome d'halogène, un résidu hydroxy, cyano, alcoxy en C₁₋₄, (alcoxy en C₁₋₄)-carbonyle, carboxy, carbamoyle, sulfamoyle, sulfo ou sulfato, ou un résidu de formule -B-N(R₂)-CO-Y, et le résidu
(1a) -B-N(R₂)-CO-Y
représente un résidu de formule 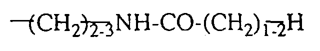 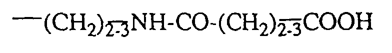 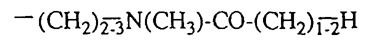 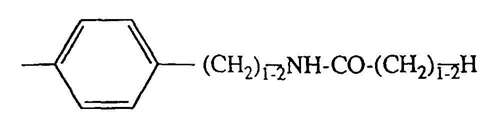 ou dans lequel le résidu -N(R₁)-B-N(R₂)-COY représente le groupe -NH-CH₂-CH(CH₃)-NHCOCH₃.

2. Colorants réactifs conformes à la revendication 1 dans lesquels R représente un atome d'hydrogène ou un résidu méthyle ou éthyle.

3. Colorants réactifs conformes à la revendication 1 ou 2 dans lesquels D représente le résidu d'un colorant monoazoïque, diazoïque, phtalocyanine, formazan ou dioxazinique.

4. Procédé de préparation de colorants réactifs de formule (1) conformes à la revendication 1 caractérisé en ce que l'on fait réagir, dans n'importe quel ordre, un colorant organique de formule 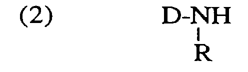 ou un précurseur d'un tel colorant, avec un équivalent d'une *s*-triazine de formule 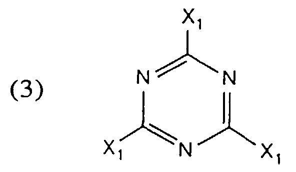 un équivalent d'une diamine de formule 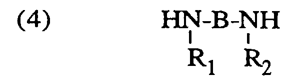 et un équivalent d'un composé introduisant le résidu de formule
(5) -CO-Y
D, R, R₁, R₂, B, X et Y ayant la signification indiquée dans le revendication 1, et X₁ étant un atome d'halogène, ou, dans le cas où l'on utilise des précurseurs de colorants, en ce que l'on convertit les produits intermédiaires en les colorants finaux recherchés.

5. Utilisation des colorants réactifs conformes à la revendication 1 pour la teinture ou l'impression de matériaux fibreux cellulosiques.

6. Utilisation conforme à la revendication 5 pour la teinture ou l'impression de coton.

## Revendications (Revendications pour l'(les) Etat(s) contractant(s) suivant(s): ES)

1. Procédé pour la préparation de colorants réactifs de formule 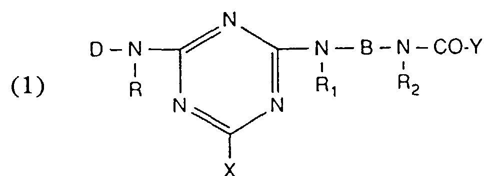 dans laquelle
D représente le résidu d'un colorant monoazoïque, polyazoïque, azoïque métallifère, anthraquinonique, phtalocyanine, formazan, azométhinique, dioxazinique, phénazinique, stilbénique, triphénylméthane, xanthène, thioxanthone, nitroarylique, naphtoquinonique, pyrènequinonique ou de type pérylène-tétracarbimide,
R représente un atome d'hydrogène ou un groupe alkyle en C₁₋₄ pouvant être substitué par un résidu hydroxy, cyano, carboxy, sulfo ou sulfato,
X représente un atome de fluor ou de chlore,
R₁ représente un atome d'hydrogène, un résidu alkyle en C₁₋₄ pouvant être substitué par un atome d'halogène, un résidu hydroxy, cyano, alcoxy en C₁₋₄, (alcoxy en C₁₋₄)-carbonyle, carboxy, carbamoyle, sulfamoyle, sulfo ou sulfato, ou un résidu de formule -B-N(R₂)-CO-Y, et le résidu
(1a) -B-N(R₂)-CO-Y
représente un résidu de formule 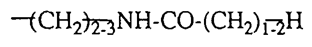 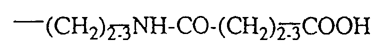 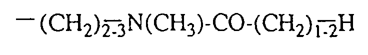 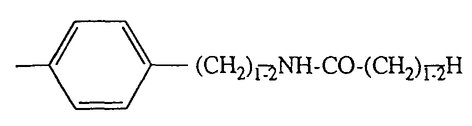 ou dans lequel le résidu -N(R₁)-B-N(R₂)-COY représente le groupe -NH-CH₂-CH(CH₃)-NHCOCH₃, caractérisé en ce que l'on fait réagir, dans n'importe quel ordre, un colorant organique de formule 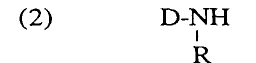 ou un précurseur d'un tel colorant, avec un équivalent d'une *s*-triazine de formule 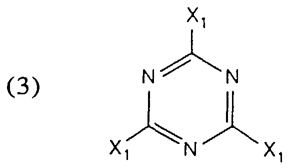 un équivalent d'une diamine de formule 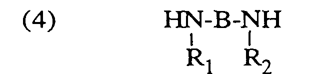 et un équivalent d'un composé introduisant le résidu de formule
(5) -CO-Y
D, R, R₁, R₂, B, X et Y ayant la signification indiquée dans le revendication 1, et X₁ étant un atome d'halogène, ou, dans le cas où l'on utilise des précurseurs de colorants, en ce que l'on convertit les produits intermédiaires en les colorants finaux recherchés.

2. Procédé conforme à la revendication 1 pour la préparation de colorants réactifs dans lesquels R représente un atome d'hydrogène ou un groupe méthyle ou éthyle.

3. Procédé conforme à la revendication 1 pour la préparation de colorants réactifs dans lesquels D représente le résidu d'un colorant monoazoïque, diazoïque, phtalocyanine, formazan ou dioxazinique.

4. Utilisation des colorants réactifs conformes à la revendication 1 pour la teinture ou l'impression de matériaux fibreux contenant de la cellulose.

5. Utilisation conforme à la revendication 4 pour la teinture ou l'impression de coton.
